# EUROPEAN PATENT APPLICATION

(11) **EP 2 177 433 A1**
(43) Date of publication of application: **21.04.2010**
(21) Application number: 07866909.0
(22) Date of filing: 11.07.2007
(51) Int. Cl.: B64C 13/00, B64D 45/00

(54) **LIGHT MULTIPURPOSE AIRCRAFT**

(71) Applicant: "Opytno-Konstruktorskoe Bjuro Im. A.s. Yakovleva", Moscow 125315 (RU); Federalnoe Gosudarstvennoe Uchrezhdenie "Federalnoe Agentsvo Po Pravovoi Zaschite Rezultatov Intelektualnoi Deyatelnosti, Moscow 125040 (RU)
(72) Inventor: DEMCHENKO, Oleg Fedorovich, Moscow 129272 (RU); DOLZHENKOV, Nikolai Nikolaevich, Moscow 125083 (RU); POPOVICH, Konstantin Fedorovich, Moscow 117296 (RU); SHKOLIN, Vladimir Petrovich, Moscow 125195 (RU); NARYSHKIN, Vitaly Jurievich, Moscow 123308 (RU); KODOLA, Valery Grigorievich, Moskovskaya obl. 141170 (RU); FEDOTOV, Georgy Aleksandrovich, Moscow 125422 (RU)
(74) Representative: Andrae, Steffen
(86) International application number: PCT/RU2007/000381
(87) International publication number: WO 2009/008761

(57) **Abstract**

A light multi-purpose aircraft comprises a fuselage 1; a wing 2; a fin assembly 3; a landing gear 4; main and auxiliary power plants 5; a crew protection system; an integrated complex for controlling a general-purpose aircraft equipment which is engaged through a multiplexer channel with a set of on-board digital computers, electronic control systems of port and starboard engines, a recording and monitoring system, a guidance and landing equipment, a complex control system and is engaged through code communication lines with a fuel control and monitoring system, a voice message equipment, a complex electron display system, **characterized in that** said crew protection system is made in the form of a multilayer screen of auxiliary and main equipment configured in order of increasing its significance farther and farther away from the shell and load-bearing elements of the fuselage 1; the greatest component density is ensured with due regard for the most likely zones and aspect angles of injury: ∼30° with respect to the surface of approaching the destruction means at the front-from below and on the side-from below of the fuselage forepart, and said integrated complex for controlling a general-purpose aircraft equipment is provided with a crew warning system 12 regarding the fall outside limiting values of destruction aspect angles, said system 12 being connected to the complex electron display system and the voice message equipment.

## Description

### FIELD OF THE INVENTION

The present invention relates to aeronautical engineering and is intended for use when manufacturing aircrafts.

### BACKGROUND OF THE INVENTION

There has been known an aircraft comprising, inter alia, a fuselage, a wing, a tail unit, a landing gear, main and auxiliary power plants, a system for controlling a general-purpose aircraft equipment having two automatic control loops structurally embodied in the main and reserve conversion and calculation units that are connected to actuators through a monitoring and control unit. A manual control loop is provided with control panels, an enunciator panel and a central signal light. A control system is engaged via a multiplexer channel with a set of on-board digital computers, electronic control systems of port and starboard engines, a recording and monitoring system, a guidance and landing equipment and a complex control system. Said control system is engaged through code communication lines with a fuel control and monitoring system, a voice message equipment, a complex electron display system and said auxiliary power plant (RU 2263044 C1, B 64 C 13/ 00, October 27, 2005).

The drawback to the known aircraft is associated with the need for improving its survivability, decreasing mass-dimensional characteristics and realizing conditions of multipurpose.

There has been known a light multi-purpose aircraft at enhanced maneuvering properties comprising, inter alia, a fuselage, a wing, a fin assembly, a landing gear, a power plant and a controlling integrated complex consisting of an information exchange system, an on-board digital computer system for controlling flight and training and combat operations, an external storage and an information input system, a radio inertial navigation and landing system, a complex aircraft control system with consoles arranged in a pilot and operator cockpit, an armament control system with consoles arranged in a pilot and operator cockpit, a complex system for electronic display, control and sighting, an emergency warning board, a two-fold redundant aircraft equipment control system, an on-board objective monitoring system, a speech information control system, an electric power supply system, internal and external lighting facilities, an emergency escape complex system, a two-fold redundant power plant control system. In doing so, the information exchange system is divided into three independent multiplexer information exchange channels, radial couplings are made between the computing system and the aircraft equipment control system and also between the complex system for electronic display, control and sighting and the complex aircraft control system (Patent RU 2252899 C1, B64C 13/00).

The drawback to the known aircraft is also associated with the need for improving its survivability, decreasing mass-dimensional characteristics and realizing conditions of multipurpose.

The closest prior art to be used for the claimed invention is the SU-25 attack aircraft (see, Bedretdinov I.A., The SU-25 Attack Aircraft and Its Derivatives, M., OOO "B & Co Publishing Group", p. 15) comprising a fuselage; a wing; a fin assembly; a landing gear; a power plant and also a controlling complex incorporating an information exchange system; an on-board digital computer system for controlling flight; a radio inertial navigation and landing equipment; an aircraft control system with consoles arranged in a pilot cockpit; an armament control system with consoles arranged in a pilot cockpit; a system for electronic display, control and sighting; an emergency warning board; an electric power supply system; lighting facilities; a crew protection system; an emergency escape system; a power plant control system in which said crew protection system is made in the form of essentially complete armoring of the bottom of a crew cabin (cockpit) and partial armoring of the walls of consumable fuel tanks and also partial armoring of engine nacelle bonnets from bullet-dangerous directions. In addition, an armored helmet and armored vest form a part of the pilot equipment.

The drawback to the known aircraft consists in inconsistency of its mass-dimensional characteristics and survivability characteristics with the specifics of using thereof as a light multi-purpose aircraft.

### SUMMARY OF THE INVENTION

It is an object of the present invention to create a light multi-purpose aircraft enabling improvements in its survivability, decrease in mass-dimensional characteristics and realization of conditions of multipurpose.

### BRIEF DESCRIPTION OF THE DRAWINGS

The present invention is explained by the following drawings in which:
FIGS. 1 and 2 show a general view of the aircraft,
   where:
   1 - a fuselage;
   2 - a wing;
   3 - a fin assembly;
   4 - a landing gear;
   5 - a power plant;
   6 - a crew cabin (cockpit).
FIGS. 3 and 4 show calculation aspect angles of the destruction means hit in the aircraft.
FIG. 5 shows the aircraft in section A-A to illustrate position of a pilot ejection seat 7 with a bottom 8 of a cockpit 6, a leg 9 of a landing gear 4.

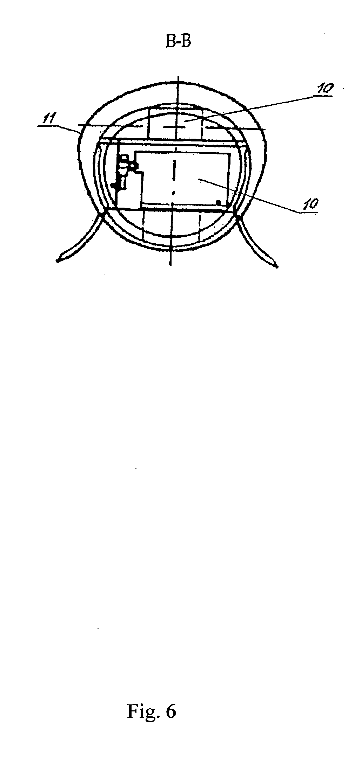

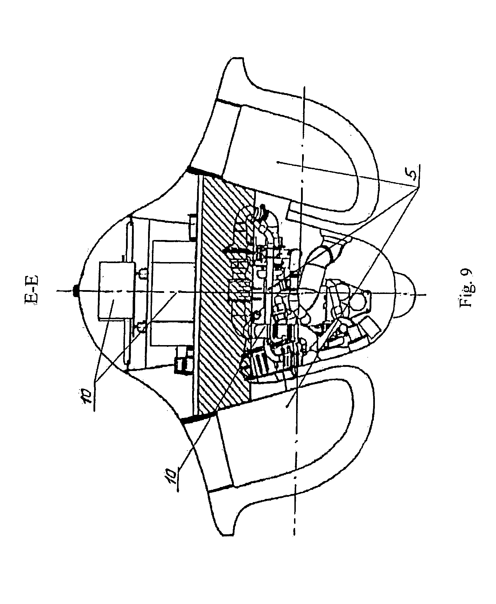

FIGS. 6 - 9 show an aircraft fuselage 1 in sections B-B, C-C, D-D, E-E in the zones of the most likely injury of the crew by the destruction means, to illustrate the general principles of configuring the equipment, parts of the systems and units 10 to be used in the crew protection system.
FIGS. 10 - 11 show the crew protection variants using suspended and inserted armoring by means of quick-detachable armor plates 13.

### DETAILED DESCRIPTION OF THE INVENTION

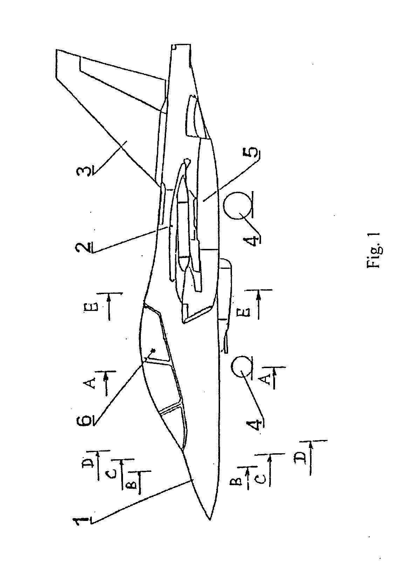

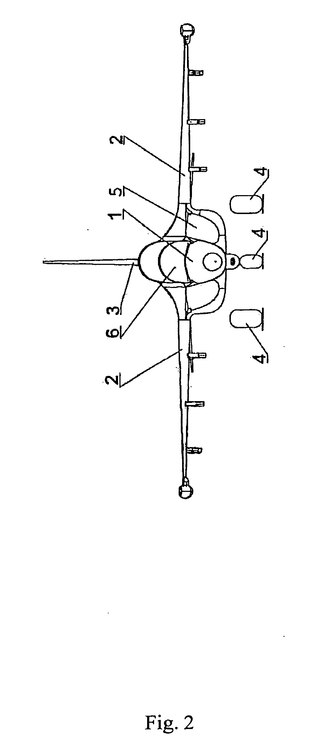

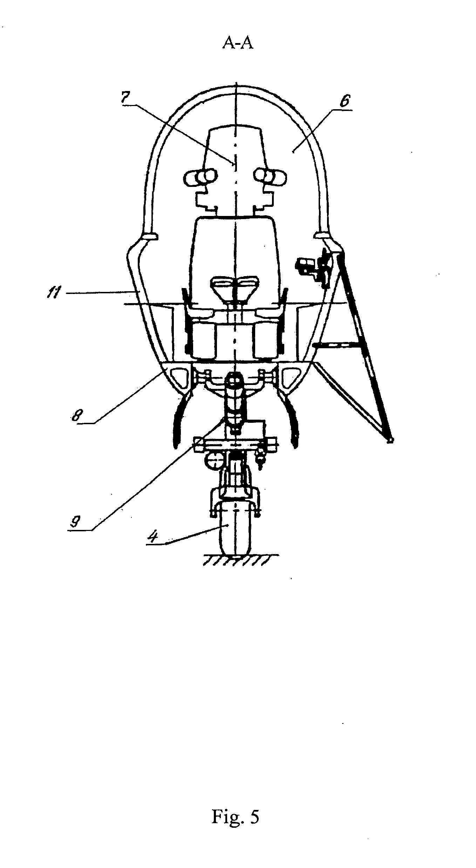

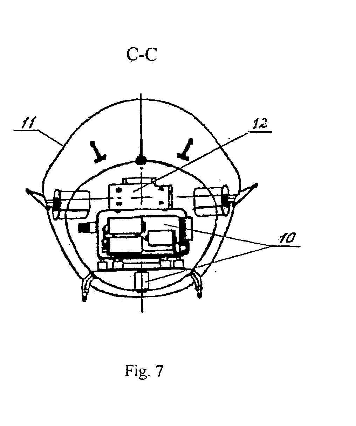

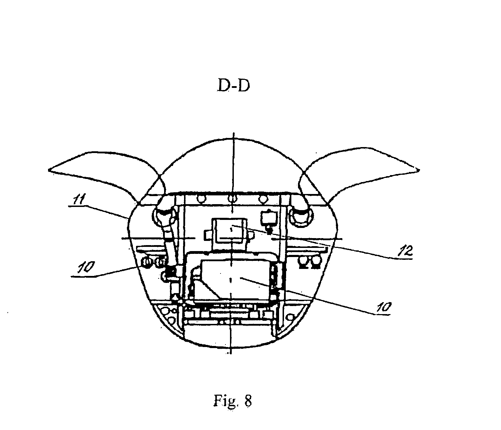

With reference to Figs. 1 and 2, an aircraft comprises a fuselage 1; a wing 2; a fin assembly 3; a landing gear 4; a power plant 5; a cockpit 6; as well as other functional complexes and systems that are necessary for keeping the aircraft operating. The cockpit 6 is positioned in the aircraft nose section. The cockpit 6 (Fig. 5) comprises a seat 7, a bottom 8. Below the bottom 8, there is located a front landing gear leg 9, in the aircraft nose section - units 10, parts of the fuselage 1, an aircraft covering 11. In the front part of the cockpit 6, there is installed a crew warning system 12 regarding the fall outside limiting values of destruction aspect angles (see, Fig. 7, Fig. 8), said system 12 being connected to a complex electron display system and a voice message equipment of an integrated aircraft control complex.

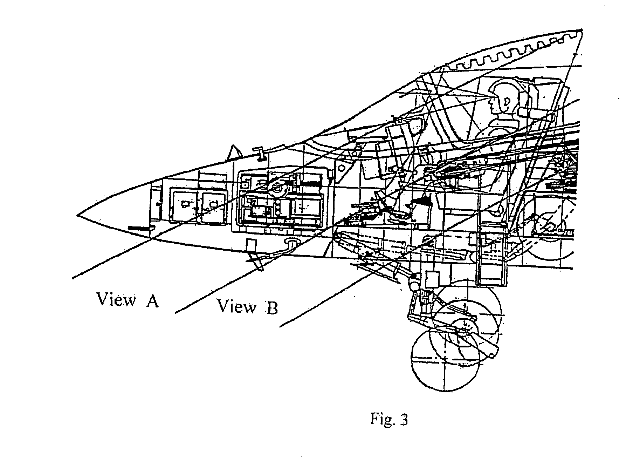

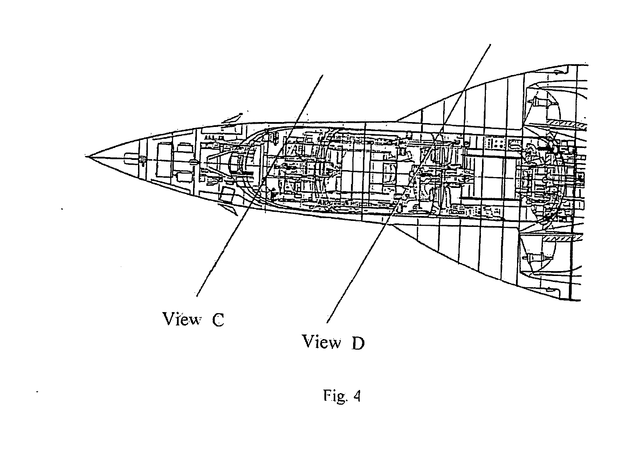

When the destruction means (7.62 mm caliber bullets) hit the aircraft from the aspect angle A (at the front-from below; Fig. 3) or the aspect angle B (at the front-on the side; Fig. 4), the destruction means encounter sufficient thickness of the equipment, parts of the systems, units 10, the covering 11, the bottom 8, the cockpit 6, load-bearing elements of the fuselage 1 (frames, etc. - not shown in the drawings), and owing to a specific equipment configuration, parts of the systems and units 10, are fully halted until they approach the cockpit 6. In doing so, the equipment, parts of the systems and units 10 are located in order of increasing their significance farther and farther away from the covering (shell) 11 and load-bearing elements of the fuselage 1 (the greatest component density of the equipment, parts of the systems and units 10 is ensured with due regard for the most likely zones and aspect angles of injury: approximately 30 degrees with respect to the surface of approaching the destruction means). In such a manner the aspect angles A (Fig. 3) and C (Fig. 4) form a type I injury zone - protection of the cockpit 6 is not required from these aspect angles. In addition, Fig. 3 illustrates a part of zone I with the aspect angle B, said part being closed by the front landing gear leg 9 and thus also require no protection.

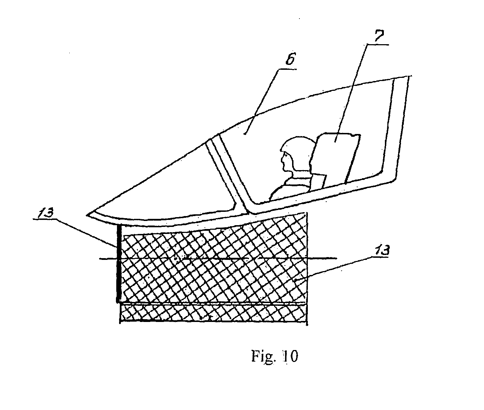

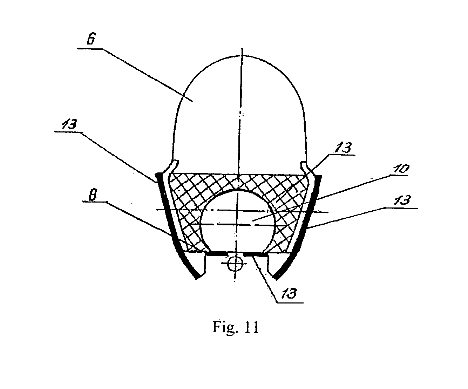

A type II injury zone is located from the aspect angles B (from below-at the front; Fig. 3) and D (on the side-at the front; Fig. 4). Here, a the overall thickness of the covering 11, the bottom 8 of the cockpit 6, the equipment, parts of the systems and units 10 as well as load-bearing elements of the aircraft is insufficient to avoid an additional protection of the crew compartment. In order to improve reliability of the crew protection in a type II injury zone, use is made of quick-detachable armor plates 13 that may be made both suspended on the covering 11 and inserted, mounted inside the fuselage and on the undersurfaces and faces of the housings of the equipment, parts of the systems and units 10. In doing so, the thickness of the armor plates 13 and materials used for their manufacture are selected with due regard for the location and significance of the equipment, parts of the systems and units 10 (see, Fig. 10 and Fig. 11), whereas suspension plates 13 are made with an estimated lift-to-drag ratio corresponding to their place of attachment, in order to decrease aerodynamic drag. In doing so, the suspension plates 13 are provided with both passive and active protection elements.

The aspect angle D (Fig. 4) incorporates a type III injury, that is, the head and the upper part of the pilot body fail to have a reliable protection. In this case the pilot is protected by the armored glass of the cockpit 6 and autonomous means of protection: an armored helmet and armored vest (not shown in the drawings).

Breaking-down into injury zones according to I, II and III types may be, if necessary, yet more detailed.

Such an approach enables provision of optimal efficiency of the crew protection in terms of both an additional weight within the aircraft and minimization of sophistications in the aircraft design.

The above measures leading to the improved aircraft survivability make it possible to increase the probability of a pilot invulnerability:
- at the front: from 0,424 (without armor) to 0.76;
- on the side: from 0.2 (without armor) to 0.6.

Optimal use of the screening, selection of the most likely aspect angles of approaching the destruction means and also the destruction means themselves which are the most likely for the aircraft, enable decrease in additional crew protection expenditure from 300 Kg to 95 Kg, i.e. about one-third as large.

By this means the proposed scheme for protecting the aircraft crew cabin with a substantial decrease in additional weight for armoring enables increase in the probability of a pilot invulnerability by approximately 40 percent.

## Claims

1. A light multi-purpose aircraft comprising a fuselage (1); a wing (2); a fin assembly (3); a landing gear (4); main and auxiliary power plants (5); a crew protection system; an integrated complex for controlling a general-purpose aircraft equipment which is engaged through a multiplexer channel with a set of on-board digital computers, electronic control systems of port and starboard engines, a recording and monitoring system, a guidance and landing equipment, a complex control system and is engaged through code communication lines with a fuel control and monitoring system, a voice message equipment, a complex electron display system, **characterized in that** said crew protection system is made in the form of a multilayer screen of auxiliary and main equipment configured in order of increasing its significance farther and farther away from the shell and load-bearing elements of the fuselage (1); the greatest component density is ensured with due regard for the most likely zones and aspect angles of injury: ∼30° with respect to the surface of approaching the destruction means at the front-from below and on the side-from below of the fuselage forepart, and said integrated complex for controlling a general-purpose aircraft equipment is provided with a crew warning system (12) regarding the fall outside limiting values of destruction aspect angles, said system (12) being connected to the complex electron display system and the voice message equipment.

2. A light multi-purpose aircraft as claimed in Claim 1, **characterized in that** the crew protection system is equipped with suspended quick-detachable armor plates (13) provided with both passive and active protection elements and mounted with due regard for the most likely zones and aspect angles of injury on the outer surface of the fuselage (1), said plates (13) being made with an estimated lift-to-drag ratio.

3. A light multi-purpose aircraft as claimed in Claim 1, **characterized in that** the crew protection system is equipped with inserted quick-detachable armor plates (13) mounted inside the fuselage (1) and also on the undersurfaces and faces of the housings of units and equipment used as additional passive protection elements.
